# EUROPÄISCHE PATENTSCHRIFT

(11) **EP 4 017 616 B1**
(45) Veröffentlichungstag und Bekanntmachung des Hinweises auf die Patenterteilung: **24.09.2025**
(21) Anmeldenummer: 20760415.8
(22) Anmeldetag: 18.08.2020
(51) Int. Cl.: B01D 53/86, B01J 21/06, B01J 23/745, B01J 35/39, B01J 35/61, C04B 14/30, C04B 28/04, C04B 111/00, C04B 111/20

(54) **PHOTOKATALYTISCH AKTIVER AEROGELBETON**
PHOTOCATALYTICALLY ACTIVE AEROGEL CONCRETE
BÉTON AÉROGEL PHOTOCATALYTIQUEMENT ACTIF

(30) Priorität: 22.08.2019 DE 102019122616
(43) Veröffentlichungstag der Anmeldung: 29.06.2022
(73) Patentinhaber: Universität Duisburg-Essen, 45141 Essen (DE); Deutsches Zentrum für Luft- und Raumfahrt e.V., 51147 Köln (DE)
(72) Erfinder: SCHNELLENBACH-HELD, Martina, 45134 Essen (DE); WELSCH, Torsten, 53775 Hennef (DE); MILOW, Barbara, 50354 Hürth (DE)
(74) Vertreter: dompatent von Kreisler Selting Werner - Partnerschaft von Patent- und Rechtsanwälten mbB
(86) Internationale Anmeldenummer: PCT/EP2020/073065
(87) Internationale Veröffentlichungsnummer: WO 2021/032717

(56) Entgegenhaltungen:
- WO-A1-2013/118940
- WO-A1-2016/202718

## Beschreibung

Die vorliegende Erfindung betrifft eine Aerogelbetonmischung, enthaltend einen Photokatalysator, einen daraus erhältlichen photokatalytisch aktiven Hochleistungsaerogelbeton sowie ein Verfahren zu dessen Herstellung.

Die Belastung der Luft durch Schadstoffe wie Stickoxide oder leichtflüchtige Kohlenwasserstoffe (VOC) ist aktuell und langfristig ein akutes Thema, insbesondere im innerstädtischen Bereich. Um die entsprechenden Grenzwerte der Europäischen Union einzuhalten und damit die Bevölkerung vor schädlichen Schadstoffkonzentrationen zu schützen, ist die NO_{X}-Belastung in der Luft dringend zu reduzieren. Hierzu sind zwei verschiedene Ansätze denkbar: Zum einen ist es möglich, die Schadstoffemissionen, die vorrangig durch den Verkehr produziert werden, zu senken. Hierzu wird auf die aktuell diskutierten Fahrverbote für ältere Diesel-PKW und die Bemühungen von Politik und Automobilindustrie verwiesen, die Emissionen durch Elektrofahrzeuge oder sauberere Verbrennungsmotoren zu senken. Eine andere Möglichkeit ist, die bereits in der Luft enthaltenen Schadstoffe durch geeignete Verfahren so weit wie möglich auf der Luft zu entfernen. In diesem Kontext sind unter anderem photokatalytisch aktive Oberflächen zu nennen. Hierbei wird durch den Einsatz beleuchteter Katalysatoren eine Oxidation und damit ein Abbau der Schadstoffe herbeigeführt. Aus den Stickoxiden werden Nitrate gebildet, die bei Beregnung der Oberfläche ausgewaschen und in das Grundwasser abgeleitet werden. Hierdurch wird die Oberfläche regeneriert, so dass der Prozess erneut ablaufen kann.

Grundlage der photokatalytischen Zersetzung von Luftschadstoffen ist die Wechselwirkung eines Photohalbleiters mit Licht spezieller Wellenlängen. Es werden komplexe Redoxreaktionen ausgelöst, die zum Abbau verschiedener organischer und anorganischer Verbindungen wie Verschmutzungen oder Luftschadstoffe führen können. In der Regel wird als Photohalbleiter Titandioxid (TiO₂) beispielsweise in Form von Anatas verwendet, das sich mit UV-Licht anregen lässt und in Anwesenheit von Luftfeuchtigkeit und Luftsauerstoff über mehrere Zwischenschritte unter anderem Stickoxide zum unschädlichen Nitrat umwandelt. So ermöglicht Titandioxid sowohl den Abbau von Luftschadstoffen als auch von Schadstoffen und Verschmutzungen auf Oberflächen. Zusätzlich entsteht eine superhydrophile Oberfläche, die einen zusätzlichen Reinigungseffekt bewirken kann.

Die für diese Reaktion entscheidenden Größen sind Lichtintensität, Schadstoffkonzentration und Luftfeuchtigkeit. Zur Erhöhung des Gesamtabbaus von Schadstoffen ist eine Erhöhung der Gesamtoberflächen eines photokatalytischen Materials notwendig. Zur Effizienzsteigerung wird in der Regel möglichst feines Titandioxid mit einer hohen spezifischen Oberfläche für die Reaktion verwendet. Feine Materialien neigen jedoch stark zur Agglomeration. Diese Agglomerate lassen sich bei üblichen Mischprozessen nur schwer aufbrechen, so dass bei weitem nicht das volle Potential der großen TiO₂-Oberfläche in eine Verbesserung der photokatalytischen Aktivität umgesetzt werden kann.

Die Wirksamkeit photokatalytisch aktiver Bauteiloberflächen ist von zahlreichen Parametern abhängig. Neben den klimatischen Randbedingungen (UV-A-Strahlungsintensität, Windgeschwindigkeit) sind die geometrischen Randbedingungen (photokatalytisch wirksame Fläche, Gebäudehöhe, Straßenschluchtbreite) und die Depositionsgeschwindigkeit des verwendeten Photokatalysators von maßgeblicher Bedeutung. Für die aktuell verfügbaren Photokatalysatoren auf TiO₂-Basis liegen die Depositionsgeschwindigkeiten bei circa 0,2 bis 0,4 cm/s. Reduktionsraten für den NO₂- beziehungsweise NO_{X}-Abbau wurden durch Messungen bislang nur für photokatalytisch aktive Betonpflasterflächen ermittelt. Die Angaben zu photokatalytisch aktiven Fassadenflächen fußen im Wesentlichen auf Modellrechnungen. Bei der Auswertung vorhandener *in situ-*Messungen ist auf unterschiedliche Messhöhen zu achten, bei Modellrechnungen auf die realistische Annahme der vorgenannten Parameter. Die in der Literatur genannten Reduktionsraten schwanken daher sehr stark zwischen 2 und 80%. Für bislang mit Photokatalysatoren ausgestattete Betonpflasterflächen an Plätzen in Deutschland werden bei einer Messhöhe von 3,00 m über Gelände NO_{X}-Reduktionsraten von 20 bis 35% angegeben. Modellrechnungen für Straßenschluchten ("Canyons") mit photokatalytisch aktiven Fassaden und Fahrbahnen führen auf mögliche Reduktionsraten von etwa 10 bis 25%. Aufgrund des großen Einflusses der vorgenannten Parameter, die zum Teil erheblichen Streuungen unterliegen, sind diese Werte als Trend zu verstehen. Es wird jedoch deutlich, dass photokatalytisch aktive Bauteiloberflächen auch in einem an Sonneneinstrahlung vergleichsweise armen Land wie Deutschland ein großes Potenzial besitzen, einen Beitrag zur Luftreinigung zu leisten.

Solche Katalysatoren, namentlich Titandioxid (TiO₂), wurden bereits in Betone eingebettet, um auf diese Weise auf großen innerstädtischen Flächen eine photokatalytische Luftreinigung durchführen zu können. Hierbei hat man sich bislang auf horizontale Flächen aus Beton, beispielsweise Betonfahrbahnen oder Betonpflaster, konzentriert. Die Nutzung an vertikalen Flächen, beispielsweise an Fassaden, ist aktuell kaum möglich, da Sichtbetonfassaden aufgrund der Anforderungen an den Wärmeschutz nur noch sehr eingeschränkt, nämlich in Form von vorgehängten Fassadenelementen bei zweischaliger Bauweise, ausführbar sind.

Die Ursache hierfür ist die hohe Wärmeleitfähigkeit von Normalbeton in Höhe von λ ≈ 2,5 W/(mK). Zur Reduzierung des Wärmedurchgangskoeffizienten au-ßenluftberührter Bauteile kommen aus diesem Grund Zusatzmaßnahmen, wie beispielsweise die Anbringung einer außenseitigen Wärmedämmung, zur Anwendung. Diese bringen Nachteile sowohl in bauphysikalischer als auch in ökologischer und gestalterischer Hinsicht sowie im Hinblick auf den Brandschutz mit sich. Um die Anordnung einer zusätzlichen Dämmebene zu vermeiden, wurden bereits in den 1990er Jahren hochfeste Konstruktionsleichtbetone eingesetzt, bei denen die herkömmliche Gesteinskörnung durch kornporige mineralische Zuschläge wie Blähton, Blähschiefer oder Blähglas ausgetauscht wurde. Die Wärmeleitfähigkeiten können so auf einen Bereich von 0,40 bis 1,35 W/(mK) bei mit Normalbeton vergleichbaren Druckfestigkeiten reduziert werden, was jedoch immer noch verhältnismäßig große Wanddicken erfordert.

Die im Stand der Technik beschriebenen photokatalytischen Betone eignen sich aufgrund ihres nachteiligen Verhältnisses zwischen Druckfestigkeit und Wärmeleitfähigkeit somit nicht zum großflächigen Einsatz an vertikalen Flächen.

Ein vielversprechender Ansatz zur Herstellung von Konstruktionsleichtbetonen mit einer geringen Wärmeleitfähigkeit sind sogenannte Aerogelbetone, bei denen insbesondere Quarzglas-Aerogelgranulat (SiO₂) in Zementmatrizen eingebettet wird.

Aerogel ist ein hauptsächlich aus Luft bestehender, ultraleichter Matrixwerkstoff, dessen Herstellung über ein chemisches Verfahren (Sol-Gel Verfahren) erfolgt. Es besitzt eine offene, schwammartige Nanostruktur und gehört zu den leichtesten vorkommenden Stoffen mit einer typischen Dichte in einem Bereich von 2 bis 250 kg/m³. Die Poren des Gels sind so klein, dass die darin befindliche Luft nicht zum Wärmetransport beitragen kann, denn die Porengrößen liegen unterhalb der mittleren freien Weglänge der Luft. Die Wärmeleitfähigkeit der Aerogele liegt entsprechend bei einem sehr geringen Wert von 0,017 bis 0,021 W/(mK) (konventionelle Wärmedämmung: 0,04 W/(mK)).

Ein mineralischer Baustoff auf Basis von Aerogel ist beispielsweise aus DE 10 2004 046 495 B4 bekannt. Offenbart sind Aerogelbetone mit einem Aerogelgehalt von 50 bis 75 Vol.-% und daraus resultierenden Festbetonrohdichten zwischen 580 und 1050 kg/m³. Die an Prismen mit 40 mm Kantenlänge ermittelten Druckfestigkeiten lagen zwischen 0,6 und 1,5 MPa, die ermittelte Wärmeleitfähigkeit betrug nur λ = 0,10 W/(mK).

Hervorragende Eigenschaften konnten überdies im Hinblick auf den Brandschutz und auf die Schalldämmung festgestellt werden. Bei von Hub et al. (Hub et al., Leichtbeton mit Aerogelen als Konstruktionswerkstoff, Beton- und Stahlbau 2013, H.9, S. 654-661) durchgeführten Untersuchungen an aerogelhaltigen Leichtbetonen zeigte sich, dass sich Aerogelbeton durch konventionellen Abbruch, anschließende Zerkleinerung und Aufteilung in verschiedene Kornfraktionen wiederverwerten lässt. Die Druckfestigkeitsuntersuchungen ergaben bei Trockenrohdichten zwischen 500 und 620 kg/m³ Druckfestigkeiten zwischen 1,4 und 2,5 MPa. Die Wärmeleitfähigkeiten variierten zwischen λ = 0,06 W/(mK) (phd = 400 kg/m³) und λ = 0,1 W/(mK) (phd = 570 kg/m³), wobei mit kleiner werdender Rohdichte auch eine Reduktion der Wärmeleitfähigkeit und der Druckfestigkeit einherging. Der Aerogelbeton zeigte eine hohe Schwindneigung (2,2 mm/m) und einen Wärmeausdehnungskoeffizienten α = 5,3 · 10-6 1/K. Bei den Prüfungen zum Frostwiderstand von Aerogelbeton wurde eine kaum messbare Abwitterung bestimmt.

Gao et al. (Gao et al., Aerogel-incorporated concrete: An experimental study, Construction and Building Materials 2014, S. 130-136) untersuchten aerogelmodifizierte Betone mit Aerogelgehalten zwischen 0 und 60 Vol.-% (phd = 1000 bis 2300 kg/m³). Bei einem Aerogelgehalt von 60 Vol.-% wurden eine Wärmeleitfähigkeit von 0,26 W/(mK), eine Druckfestigkeit von 8,3 MPa und eine Biegezugfestigkeit von 1,2 MPa ermittelt.

Von Ng et al. (Ng et al., Experimental investigations of aerogel-incorporated ultra-high performance concrete, Construction and Building Materials 2015, S. 307-316) wurde für einen UHPC-Aerogelmörtel die Abhängigkeit zwischen Aerogelgehalt und der Frischbetonrohdichte, der Festbetonrohdichte, der Biegezug- und Druckfestigkeit sowie der Wärmeleitfähigkeit untersucht. Die ermittelten Wärmeleitfähigkeiten lagen zwischen 2,3 W/(mK) für reinen UHPC

Mörtel und 0,31 W/(mK) für einen Aerogelmörtel mit 80 Vol.-% Aerogel. Bei einem Aerogelgehalt von 80 Vol.-% war die Druckfestigkeit nicht messbar, die Biegezugfestigkeit lag bei 0,2 MPa. Bei 50 Vol.-% Aerogel wurde eine Druckfestigkeit von 20 MPa sowie eine Wärmeleitfähigkeit von 0,55 W/(mK) gemessen. Die bisher entwickelten Aerogelbetone weisen zusammenfassend hervorragende bauphysikalische Eigenschaften im Hinblick auf den Wärme-, Schall- und Brandschutz auf, verfügen aber über für baupraktische Anwendungen unzureichende Druckfestigkeiten.

WO 2016/202718 offenbart einen Hochleistungsaerogelbeton, der 10 bis 85 Vol-%/m³ Aerogelgranulat mit einer Korngröße im Bereich von 0,01 bis 4 mm enthält. Dieser Werkstoff zeichnet sich durch ein äußerst günstiges Verhältnis zwischen Rohdichte und Druckfestigkeit, Druckfestigkeit und Wärmeleitfähigkeit sowie durch hervorragende Schallschutzeigenschaften aus. Das Material besitzt keine photokatalytischen Eigenschaften.

WO 2013/118940 offenbart Zementmischungen, welche ein Silica-Aerogel sowie ein photokatalytisches Metalloxid enthalten.

Der vorliegenden Erfindung liegt die Aufgabe zugrunde, einen photokatalytisch aktiven Hochleistungsaerogelbeton bereitzustellen, der sich durch ein gegenüber dem Stand der Technik verbessertes Verhältnis zwischen Rohdichte und Druckfestigkeit, Druckfestigkeit und Wärmeleitfähigkeit sowie durch hervorragende Schallschutzeigenschaften auszeichnet. Insbesondere soll dadurch ein photokatalytisch aktiver Beton bereitgestellt werden, der in vertikalen Flächen, wie Fassaden, insbesondere Sichtbetonfassaden, eingesetzt werden kann.

In einer ersten Ausführungsform wird die erfindungsgemäße Aufgabenstellung gelöst durch eine Aerogelbetonmischung, enthaltend
10 bis 85 kg/m³ Aerogelgranulat mit einer Korngröße im Bereich von 0,01 bis 4 mm,
100 bis 900 kg/m³ anorganisches, insbesondere hydraulisches Bindemittel,
10 bis 360 kg/m³ wenigstens einer Silikastaubsuspension,
1 bis 45 kg/m³ wenigstens eines Fließmittels,
0,2 bis 9 kg/m³ wenigstens eines Stabilisierers,
0 bis 1200 kg/m³ wenigstens eines Leichtzuschlages,
dadurch gekennzeichnet, dass die Aerogelbetonmischung einen Photokatalysator enthält.

Eine Hochleistungsaerogelbetonmischung ohne Photokatalysator ist aus WO 2016/202718 bekannt, auf die hier vollinhaltlich Bezug genommen wird. Insbesondere kann die erfindungsgemäße Aerogelbetonmischung die in WO 2016/202718 beschriebenen weiteren Inhaltsstoffe in den dort genannten Mengen enthalten.

Aus DE199 24 453 A1 geht ein aus einer Mischung erhältlicher Formkörper hervor, wobei die Mischung enthält
- Silicagel,
- Bindemittel in Form von beispielsweise feinstteiligem porösen Silica,
- Plastifizierungsmittel (Fließmittel),
- Celluloseether, Stärke (beides Stabilisier),
- Lösungsmittel (Wasser) und
- Mischoxide SiO₂/TiO₂.

Angaben über die Photoaktivität sind nicht vorhanden. Bekanntermaßen sind nicht alle Modifikationen von Titandioxid photokatalytisch aktiv.

Neuere Entwicklungen in der Bindemitteltechnologie lassen erkennen, dass zukünftig auch nicht hydraulische Bindemittel eine Rolle spielen könnten. Beispiele sind alkalisch aktivierte Binder, Geopolymere, carbonatisierte Calciumsilikate oder Magnesia- bzw. Phosphatbinder. Die Bindung kann dann durch Hydratation, Polymerisation, Carbonatisierung oder eine Säure-Basen-Reaktion erfolgen.

Silikastaub steht erfindungsgemäß synonym für die Begriffe "Kieselgel" und "Silica", da dieser Begriff in "Betonkreisen" geläufiger als Kieselgel ist.

Erfindungsgemäß optimierte Mischungen enthalten auch Fasern. Eingesetzt wurden beispielsweise Carbon-, Glas- Keramik- und Stahlfasern. Aber auch Kunststofffasern und Naturfasern sind ohne weiteres einsetzbar.

Überraschenderweise hat sich gezeigt, dass die besonderen Eigenschaften des Hochleistungsaerogelbetons in Bezug auf das Verhältnis zwischen Rohdichte und Druckfestigkeit und Druckfestigkeit und Wärmeleitfähigkeit sowie die hervorragenden Schallschutzeigenschaften auch nach Zugabe eines Photokatalysators zur Aerogelbetonmischung erhalten bleiben. Der erfindungsgemäße Hochleistungsaerogelbeton ist überdies vollständig anorganisch und somit nicht brennbar, nicht toxisch oder kanzerogen. Das Material ist diffusionsoffen und wasserhemmend und eignet sich auch aus diesen Gründen hervorragend für die Herstellung von Außenbauteilen und Fassaden mit photokatalytischen Eigenschaften.

Erfindungsgemäß wird die Aerogelbetonmischung durch die Zugabe eines Photokatalysators mit der weiteren Eigenschaft der Photokatalyse versehen und damit zu einem multifunktionalen Baustoff weiterentwickelt. Damit wird überraschenderweise ein Einsatz photokatalytisch aktiver Werkstoffe auch an vertikalen Oberflächen möglich. Mithilfe der erfindungsgemäßen Aerogelbetonmischung können Fassadenelemente, Fertigteile oder Mauersteine hergestellt werden, bei denen ohne weitere Arbeitsschritte oder weiteren Materialeinsatz tragende, wärmedämmende, schallisolierende, brandschützende und luftreinigende Eigenschaften miteinander kombiniert werden können.

Überraschenderweise hat sich gezeigt, dass unter Einsatz der erfindungsgemäßen Aerogelbetonmischung im "frisch-auf-fest" Verfahren mehrschichtige Bauteile aus Aerogelbeton gefertigt werden können. Die erzielbaren Scher- und Haftzugfestigkeiten liegen deutlich über den baupraktisch relevanten Anforderungen. Diese Eigenschaft kann bei der Herstellung photokatalytisch wirksamer gradierter Bauteile genutzt werden, indem der Photokatalysator nur der oberflächennahen Schicht der Bauteile hinzugefügt wird. Bei einer solchen Gradierung wird zunächst der eigentliche Konstruktionskörper in der aus mechanischen oder bauphysikalischen Gründen erforderlichen Dicke hergestellt, dann wird eine photokatalytisch aktive Hochleistungsaerogelbetonschicht von nur wenigen Millimetern Dicke aufgebracht. Dieses Verfahren gestattet es, die photokatalytisch aktive Schicht auch nachträglich aufzubringen, so dass gradierte Bauteile sowohl beim Neubau als auch beim Bauen im Bestand (beispielsweise in Form von Spritzbeton) hergestellt werden können. Weiterhin ist es denkbar, den erfindungsgemäßen Aerogelbeton für dünnwandige Fassadenelemente als Vorhangfassaden einzusetzen. Hierdurch werden Ressourcen geschont und der Einsatz teurer Photokatalysatoren, insbesondere TiO₂, auf ein Mindestmaß reduziert.

Auf Grundlage der Mischungszusammensetzungen für Hochleistungsbeton (HPC), Ultrahochleistungsbeton (UHPC) und Leichtbeton (LC) werden mit der vorliegenden Erfindung Mischungen für photokatalytisch aktiven Aerogelbeton bereitgestellt. Der erfindungsgemäße photokatalytisch aktive Aerogelbeton weist außerordentliche Wärmedämmeigenschaften und eine mit Normalbeton vergleichbare Druckfestigkeit auf und kombiniert diese mit der Fähigkeit zur photokatalytischen Luftreinigung. Die hervorragenden Wärmedämmeigenschaften werden durch die Verwendung von Aerogelgranulat in einer Menge von 10 bis 85 kg/m³, vorzugsweise 70 kg/m³, insbesondere 60 bis 65, bevorzugt 50 bis 70 kg/m³ erreicht. Die Korngröße des Aerogels beträgt 0,01 bis 4 mm, insbesondere 1 bis 4 mm. Diese Korngröße kann durch einfaches Sieben erhalten werden. Hierbei werden Feinbestandteile, insbesondere Staub entfernt. Die Anwesenheit dieser Feinbestandteile führt zu einer Verschlechterung der Druckfestigkeitswerte.

Als Ausgangsmaterial für das Aerogelgranulat kann jedes geeignete Material zum Einsatz kommen. Insbesondere können Quarzglas-Aerogelgranulat (SiO₂), Granulate auf metalloxidischer Basis oder deren Mischungen zum Einsatz kommen.

Bei der Mischung von Betonen und Mörtel wird der Mischung üblicherweise Sand zugegeben. Erfindungsgemäß wird jedoch auf Sand und Grobzuschläge vorzugsweise vollkommen verzichtet (ausgenommen Mischungen mit zusätzlichen Leichtzuschlägen).

Als anorganisches Bindemittel kann jedes aus dem Stand der Technik für Betonmischungen bekannte Bindemittel eingesetzt werden. Vorzugsweise umfasst das anorganische Bindemittel hydraulische Bindemittel wie Zement, insbesondere Portlandzement. In einer bevorzugten Ausführungsform enthält die erfindungsgemäße Aerogelbetonmischung 500 bis 550 kg/m³ anorganisches, insbesondere hydraulisches Bindemittel.

Silikastaubsuspensionen im Sinne der vorliegenden Erfindung sind im Handel erhältlich und umfassen insbesondere ein sehr reaktives, amorphes Mikrosilika-Wasser-Gemisch mit hoher spezifischer Oberfläche, beispielsweise MC Centrilit Fume SX: Blaine-Wert 20000, das heißt 4 bis 5 Mal größer als Zement / Bindemittel.

Der Silikastaub kann in Pulverform oder als Suspension zugegeben werden, wobei der Feststoffgehalt der Suspension üblicherweise 50 Vol.-% beträgt. Das heißt die Silikastaubsuspension verfügt über einen Wirkstoffgehalt von 50 Vol.-%, 50 Vol.-% bestehen üblicherweise aus Wasser.

In einer bevorzugten Ausführungsform enthält die Silikastaubsuspension 1 bis 60 Vol.-%, insbesondere 50 Vol.-%, Wirksubstanz (Feststoffgehalt).

Fließmittel im Sinne der vorliegenden Erfindung sind im Handel erhältlich und umfassen insbesondere im Handel erhältliche Polycarboxylate, beispielsweise Powerflow 3100: Polycarboxylatether mit 30 Gew. % Feststoffgehalt, hoher Ladungsdichte und kurzen Seitenketten.

Stabilisierer im Sinne der vorliegenden Erfindung sind im Handel erhältlich und umfassen insbesondere im Handel erhältliche organische Polymere, beispielsweise MC Stabi 520, Wasser aufsaugende und Wasser einlagernde Cellulose.

Neben den oben genannten Bestandteilen der Aerogelbetonmischung können die erfindungsgemäßen Mischungen auch weitere übliche Betonzusatzmittel und Betonzusatzstoffe enthalten.

Betonzusatzmittel sind in den Europäischen Normen EN 934 "Zusatzmittel für Beton, Mörtel und Einpressmörtel", die in allen CEN-Mitgliedsländern verbindlich gelten, definiert. Der Teil 2 der EN 934 enthält die Definitionen und Anforderungen an Betonzusatzmittel:
"Ein Stoff, der während des Mischvorgangs des Betons in einer Menge hinzugefügt wird, die einen Masseanteil von 5 % des Zementanteils im Beton nicht übersteigt, um die Eigenschaften der Betonmischung im frischen/ und/oder erhärteten Zustand zu verändern."

Die EN 934-2 enthält Definitionen und Anforderungen für folgende einzelne Wirkungsgruppen:
- Betonverflüssiger,
- Fließmittel,
- Stabilisierer,
- Luftporenbildner,
- Beschleuniger: Erstarrungsbeschleuniger und Erhärtungsbeschleuniger,
- Verzögerer und
- Dichtungsmittel.

Sand (Kornrohdichte *ρ* > 2000 kg/m³) ist im Allgemeinen nicht erforderlich, da dieser durch Aerogelgranulat oder/und Leichtzuschläge ersetzt wird. Unter Leichtzuschlägen sind leichte Gesteinskörnungen oder Leichtsande mit einer Kornrohdichte *ρ* ≤ 2000 kg/m³ zu verstehen.

Erfindungsgemäß enthält die Aerogelbetonmischung einen Photokatalysator. Bevorzugt enthält die Aerogelbetonmischung 0,01 bis 66 M.-% vom Zementgehalt eines Photokatalysators. Besonders bevorzugt beträgt der Gehalt an Photokatalysator 1 bis 10 M.-% vom Zementgehalt, ganz besonders bevorzugt 3 bis 5 M.-% vom Zementgehalt. Ein geringerer Gehalt an Photokatalysator hat den Nachteil, dass die photokatalytische Aktivität für baupraktische Anwendungen zu schwach ausgeprägt ist. Ein größerer Gehalt an Photokatalysator hat den Nachteil, dass die Druckfestigkeit und die Dauerhaftigkeit des erhärteten Reaktionsprodukts reduziert werden können. Die Grenzen entsprechen den Werten aus der Literatur sowie dem maximalen, nach Norm zulässigen Anteil von Zusatzstoffen (in diesem Fall für Flugasche, für andere Zusatzstoffe liegt die Grenze zwischen 25 und 33%, für Pigmente ist keine Grenze angegeben). Abweichend von der übrigen Vorgehensweise sind die Angaben hier in Masseprozent vom Zementanteil, da dies in der Literatur die übliche Angabeform ist.

Als Photokatalysator kann jedes im Stand der Technik bekannte Material eingesetzt werden, welches geeignet ist, die Umsetzung von Luftschadstoffen, wie insbesondere Stickoxiden oder leichtflüchtigen Kohlenwasserstoffen, zu unschädlichen, vorzugsweise wasserlöslichen Stoffen, zu katalysieren. Vorzugsweise wird ein anorganischer Photokatalysator eingesetzt.

In einer bevorzugten Ausführungsform ist der Photokatalysator ausgewählt aus Oxiden von Titan, Eisen, Zink, Zinn, Wolfram, Niob, Tantal, und deren Mischungen. Besonders bevorzugt umfasst der Photokatalysator Titandioxid (TiO₂) oder besteht daraus. Der Photokatalysator kann auch Titandioxid in Mischung mit weiteren photoaktiven Stoffen umfassen. Wird Titandioxid als Photokatalysator eingesetzt, liegt dieses vorzugsweise in Form von Anatas vor.

Der Photokatalysator wird vorzugsweise in Form eines Pulvers oder in Form einer Suspension in die Aerogelbetonmischung eingebracht. Der Photokatalysator weist vorzugsweise eine Kristallitgröße in einem Bereich von 0,1 nm bis 10000 nm, besonders bevorzugt 2 bis 100 nm, insbesondere 15 nm auf. Eine höhere Kristallitgröße hat den Nachteil, dass die photokatalytische Aktivität zu gering ausgeprägt ist.

Vorzugsweise weist der Photokatalysator eine hohe spezifische Oberfläche auf. Die spezifische Oberfläche (BET) des Photokatalysators liegt vorzugsweise in einem Bereich von 10 bis 1200, besonders bevorzugt 150 bis 300, insbesondere 225 m²/g. Eine geringere spezifische Oberfläche hat den Nachteil, dass die Aktivzentren nicht zur Verfügung stehen.

Um die photokatalytische Wirksamkeit der erfindungsgemäßen Aerogelbetonmischung beziehungsweise damit erhaltener Aerogelbetone zu erhöhen, liegt der Photokatalysator vorzugsweise gleichmäßig in der Aerogelbetonmischung verteilt vor. In einer bevorzugten Ausführungsform umfasst die erfindungsgemäße Aerogelbetonmischung daher einen die Agglomeration des Photokatalysators hemmenden Stoff, um eine möglichst gleichmäßige Verteilung zu fördern und die Verarbeitbarkeit des Materials zu erhöhen. Hierbei ist es bevorzugt, den Photokatalysator in Mischung mit dem die Agglomeration hemmenden Stoff in die Aerogelbetonmischung einzubringen.

Als die Agglomeration des Photokatalysator hemmender Stoff können Puzzolane, insbesondere Flugasche, Trass, Lava, Silikastaub, Metakaolin, Reisschalenasche, calcinierter Ton oder deren Mischungen zum Einsatz kommen. Als besonders wirksam hat sich Flugasche, insbesondere Steinkohleflugasche, erwiesen. Unter Flugasche wird im Sinne der vorliegenden Erfindung der feste, disperse (teilchenförmige, partikelförmige, staubförmige) Rückstand von Verbrennungen verstanden, der auf Grund seiner hohen Dispersität (Feinverteilung) mit den Rauchgasen ausgetragen wird.

Die Zusammensetzung von Flugasche hängt stark vom Brennmaterial (zum Beispiel Braunkohle oder Steinkohle) ab und erstreckt sich von Restkohlenstoff und Mineralien (Quarz, Aluminiumsilikat) bis hin zu toxischen Stoffen wie Schwermetallen (Arsen bis Zink) und Dioxinen. Steinkohleflugasche besteht hauptsächlich aus den aus den natürlichen Kohlebegleitmaterialien entstehenden amorphen Phasen von Silizium-, Aluminium und Eisenoxid.

Durch die Zugabe von Flugasche wird eine Agglomeration des Photokatalysators wirksam verhindert, was zu einer besseren Verteilung und Verarbeitbarkeit des Photokatalysators und zu einem geringeren Materialverbrauch führt. Durch seine Kornstruktur und puzzolanische Eigenschaft hat Flugasche darüber hinaus einen positiven Effekt im Frischbeton und Festbeton. Im Frischbeton wird die Verarbeitung des Betons erleichtert; im Festbeton wird die Betondruckfestigkeit erhöht und durch das dichtere Betongefüge auch die Dauerhaftigkeit des Betonbauwerks verbessert.

In einer bevorzugten Ausführungsform umfasst der Photokatalysator einen die Agglomeration hemmenden Stoff, insbesondere Flugasche, in einer Menge von 50 bis 95 Gew.-%, besonders bevorzugt 65 bis 85 Gew.-%, insbesondere 75 Gew.-%, bezogen auf die Gesamtmenge an Photokatalysator und Agglomerationshemmer.

In einer alternativen Ausführungsform wird die der Erfindung zugrundeliegende Aufgabenstellung gelöst durch ein Verfahren zur Herstellung eines Aerogelbetons mit der erfindungsgemäßen Aerogelbetonmischung, wobei man zunächst Bindemittel, Photokatalysator, Aerogel und gegebenenfalls Leichtzuschläge vermischt, dann ein Wasser-Fließmittel-Gemisch und den Stabilisierer, in einer Mischpause ein Wasser-Silikastaub-Gemisch, und nach erneutem Mischen das verbleibende Wasser hinzugibt und weiter mischt. Hierbei ist die Mischreihenfolge von besonderer Bedeutung.

Zur Herstellung von Fassadenelementen, Fertigteilen oder Mauersteinen sind selbstverständlich weitere Verfahrensschritte erforderlich, die dem Fachmann ohne weiteres geläufig sind.

Mischungen für hochfeste (HPC) und ultrahochfeste Betone (UHPC) werden üblicherweise so hergestellt, wie es in Bundesverband der deutschen Zementindustrie, Zement-Merkblatt Betontechnik B 16 10.2002, Hochfester Beton / Hochleistungsbeton. Leipzig 2002, beschrieben ist: "Um eine optimale Homogenisierung speziell der Feinststoffe zu erzielen, hat sich die Dosierreihenfolge Gesteinskörnungen, Zement, Wasser und anschließend Flugasche und Silikastaubsuspension als günstig erwiesen. Zur optimalen Wirkung der Zusatzmittel sollten diese nach der Wasser- und Silikastaubzugabe dosiert werden." Aerogelbetonmischungen, die auf diese Weise hergestellt wurden, weisen, wie der Stand der Forschung und eigene Untersuchungen belegen, nur geringe Druckfestigkeiten und Leistungsfähigkeiten auf.

Gegenüber dieser dem Fachmann geläufigen Mischreihenfolge wurde das Mischregime bei dem erfindungsgemäßen Verfahren vorzugsweise folgendermaßen verändert: Im Vorfeld werden Vormischungen der flüssigen Bestandteile hergestellt. Hierzu werden 1/3 des Zugabewassers mit dem Fließmittel und 1/4 des Zugabewassers mit der Silikastaubsuspension vermischt. Danach werden das Bindemittel, der Photokatalysator, das Aerogelgranulat und - sofern vorhanden - die Leichtzuschläge miteinander vermischt. Nach 30 bis 60 Sekunden Mischzeit werden das Wasser-Fließmittel-Gemisch und der Stabilisierer in die Mischung gegeben. Nach einer Mischzeit von circa 30 bis 60 Sekunden wird das Wasser-Silikastaub-Gemisch hinzugegeben. Nach erneutem 30-sekundigem bis 2-minütigen Mischen werden die Dosierbehälter für die Silikastaubsuspension und das Fließmittel mit jeweils 50 Vol.-% des verbleibenden Zugabewassers befüllt, damit ausgespült und in den Mischer entleert. Die gesamte Mischung wird weitere 1 bis 10 Minuten gemischt, bevor sie verarbeitet werden kann. Die auf diese Weise hergestellten Mischungen zeigten überraschender Weise eine erheblich größere Druckfestigkeit und Leistungsfähigkeit als bei der Verwendung konventioneller Mischregime.

Das Zugabewasser wird so dosiert, dass Wasser-Bindemittelwerte (w/b-Werte) von 0,15 bis 1,00, insbesondere 0,20 bis 0,60, bevorzugt 0,28 bis 0,35, resultieren. Für die Berechnung des w/b-Wertes ist hier nur der Anteil des Bindemittels ohne weitere feste Bestandteile, wie beispielsweise den Silikastaub, anzusetzen.

Besonders niedrige w/b-Werte und damit verbunden hohe Druckfestigkeiten werden erhalten, wenn man das Zugabewasser vor der Vermischung mit den festen Bestandteilen kühlt, insbesondere auf eine Temperatur von weniger als 10°C, besonders bevorzugt auf weniger als 5°C.

In einer weiteren alternativen Ausführungsform wird die erfindungsgemäße Aufgabenstellung gelöst durch photokatalytisch aktive Hochleistungsaerogelbetone, Ortbetone, Betonfertigteile, Fassadenelemente, Spritzbetonschalen, oder Außenschichten von gradierten Wandelementen, erhältlich nach dem zuvor beschriebenen erfindungsgemäßen Verfahren.

Unter "gradiertem Aerogelbeton" ist im Sinne der Erfindung zu verstehen, dass Bauelemente aus mindestens zwei Schichten (Layern) verschiedener Aerogelbetonmischungen hergestellt werden. Solche Bauelemente können "frisch in frisch" oder "frisch auf fest" gefertigt werden. Im ersten Fall wird zunächst die erste Schicht Aerogelbeton betoniert, die zweite Schicht wird unmittelbar im Anschluss, noch vor Erhärten des ersten Layers, gefertigt. Beim "frisch auf fest"-Verfahren wird der zweite Layer erst nach Erhärtung der ersten Schicht hergestellt. Unabhängig vom gewählten Verfahren entsteht ein Endprodukt, das einen mehrschichtigen Aufbau aufweist, wobei die Schichten druck-, zug- und schubfest miteinander verbunden sind.

Bauelemente mit photokatalytisch aktivem Aerogelbeton, die mit den angegebenen Mischungszusammensetzungen und nach dem beschriebenen Mischregime hergestellt werden, zeichnen sich im Vergleich zu den bislang bekannten photokatalytisch aktiven Betonen überraschender Weise durch eine sehr kurze Erhärtungsdauer und eine sehr schnelle Festigkeitsentwicklung aus. Bereits nach 15 bis 30 Minuten ist ein Erstarren des Frischbetons zu beobachten, und nach circa 26 Stunden ist der Hydratationsprozess nahezu vollständig abgeschlossen, so dass zu diesem Zeitpunkt die Druckfestigkeit schon etwa 80% der Druckfestigkeit nach 28 Tagen beträgt.

In einer weiteren Ausführungsform wird die erfindungsgemäße Aufgabenstellung gelöst durch die Verwendung einer erfindungsgemäßen Aerogelbetonmischung für photokatalytische Oberflächen zum Abbau von Stickoxiden.

In einer weiteren Ausführungsform wird die erfindungsgemäße Aufgabenstellung gelöst durch die Verwendung eines erfindungsgemäßen photokatalytischen Hochleistungsaerogelbetons, Ortbetons, Betonfertigteils, Fassadenelements, Spritzbetonschale oder Außenschicht von gradierten Wandelementen, für photokatalytische Oberflächen zum Abbau von Stickoxiden.

### Ausführungsbeispiele

Es wurden Mörtelprismen mit den Abmessungen 160 mm x 40 mm x 40 mm nach DIN EN 196 mit den Mischungszusammensetzungen V1, V2, 1, 2 und 3 gemäß Tabelle 1 hergestellt. Bei den Mischungen V1 und V2 handelt es sich um Vergleichsversuche, die Mischungen 1, 2 und 3 sind erfindungsgemäße Aerogelbetonmischungen.

**Tabelle 1: Mischungszusammensetzungen (Angaben in kg/m³)**

| | **V1** | **V2** | **1** | **2** | **3** |
|---|---|---|---|---|---|
| **Zement** | 798,3 | 718,5 | 718,5 | 771,7 | 771,7 |
| **TiO₂** | - | - | 26,6 | 26,6 | |
| **Fe₂O₃** | - | - | - | - | 26,6 |
| **Flugasche** | - | 79,8 | 53,2 | - | - |
| **Silikastaubsuspension** | 207,6 | 207,6 | 207,6 | 207,6 | 207,6 |
| **Aerogelgranulat** | 46,4 | 46,4 | 46,4 | 46,4 | 46,4 |
| **Fließmittel** | 28,3 | 28,3 | 28,3 | 28,3 | 28,3 |
| **Stabilisierer** | 4,0 | 4,0 | 4,0 | 4,0 | 4,0 |
| **Wasser** | 90,2 | 90,2 | 90,2 | 90,2 | 90,2 |

Es kamen die folgenden Produkte zum Einsatz:
Zement: Portlandzement CEM I 52, 5R (Milke Premium^{®} der Firma Heidelberg-Cement^{®})
Photokatalysator: TiO₂ (Kronoclean 7000^{®} der Firma KRONOS^{®})
Flugasche: Steinkohleflugasche (steament^{®} H-4 der Firma steag^{®})
Silikastaubsuspension: Microsilika-Suspension (Centrilit Fume SX^{®} der Firma MC Bauchemie^{®})
Aerogelgranulat: SiO₂-Aerogel (Aerogel Partikel P100^{®} der Firma Cabot^{®})
Fließmittel: Hochleistungs-Fließmittel (MC-PowerFlow 3100^{®} der Firma MC Bauchemie^{®})
Stabilisierer: organischer Stabilisierer (Centrament Stabi 520^{®} der Firma MC Bauchemie^{®})

Bei dem in Mischung 1 verwendeten Photokatalysator handelt es sich um Photoment^{®}, einer Mischung aus TiO₂ ("Kronoclean 7000^{®}") und Flugasche ("Steament H4^{®}" der Firma steag) im Verhältnis ~ 1:3. Es wurden 10 Gew.-% Zement durch Photoment^{®} ersetzt, daraus resultieren die in Tabelle 1 angegebenen zurückgerechneten Mischungsbestandteile von TiO₂ und Flugasche.

Zur Herstellung der Mörtelprismen wurden die trockenen Mischungsbestandteile, d.h. Zement, Photokatalysator und das Aerogelgranulat für 60 s in einem Intensivmischer vorgemischt. Danach wurde eine Mischung aus 1/3 des Zugabewassers mit dem Hochleistungsfließmittel hergestellt und der trockenen Vormischung hinzugegeben. Nach Zugabe des organischen Stabilisierers und einer Mischzeit von weiteren 60 s wurde eine Vormischung aus 1/4 des Zugabewassers und der Silikastaubsuspension hinzugefügt. Nach erneutem Mischen für 60 s wurden die Dosierbehälter für das Silikastaubsuspension-Wasser-Gemisch und das Fließmittel mit jeweils 50 Vol.-% des verbleibenden Zugabewassers befüllt und in die Mischung entleert. Nach abschließendem Mischen für 120 s wurde der Intensivmischer gestoppt und die fertige Mischung in die vorbereiteten Schalungen für die Mörtelprismen nach DIN EN 196 gefüllt. Nach 28 Tagen Lagerung im Wasserbad wurde an den Prüfkörpern die Druckfestigkeit, die Biegezugfestigkeit und die photokatalytische Aktivität bestimmt. Die angegebene Aerogelgranulatmenge entspricht einem Anteil von 46 kg/m³.

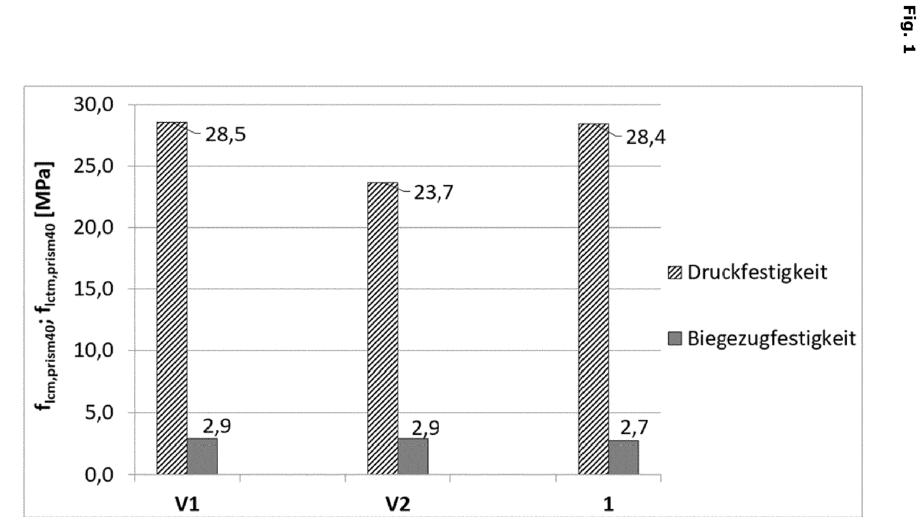

Fig. 1 zeigt die Ergebnisse der an den Mörtelprismen durchgeführten Druck-(DF) und Biegezugfestigkeitsprüfungen (BF). Die für Referenzmischung V1 ermittelten Festigkeiten (DF = 28,5 MPa, BF = 2,9 MPa) liegen geringfügig über den durchschnittlichen Werten für HPAC-Mischungen mit 50 Vol.-% Aerogelanteil. Der Ersatz von 10 Gew.-% Zement durch Flugasche (Mischung V2) führte demnach zu einer Reduzierung der Druckfestigkeit um 17% auf 23,7 MPa, während die Biegezugfestigkeit unverändert blieb. Durch Substitution von ca. 33% der Flugasche durch Titandioxid (Mischung 1) wurde der Druckfestigkeitsabfall kompensiert, während eine Reduzierung der Biegezugfestigkeit um 6% festzustellen war (DF = 28,4 MPa, BF = 2,7 MPa).

Hieraus kann der Rückschluss gezogen werden, dass bei alleiniger Verwendung der Photokatalysatoren ohne Flugasche (Mischungen 2 und 3) höhere Druck- und Biegezugfestigkeiten als bei der Referenzmischung zu erwarten sind. Allerdings ist aus der Literatur bekannt, dass TiO₂ ohne Beimischung von Flugasche zu Agglomeration neigt, was eine Beeinträchtigung der Verarbeitbarkeit und der Homogenität mit sich bringen kann.

Die Proben der Mischung 1 wurden in den Labors der Steag Power Minerals (SPM) in einem Photoreaktor in Anlehnung an ISO 22197-1 unter UV-Licht mit NO_{X} begast. Der NO_{X}-Abbau wurde nach einer, zwei, drei und vier Stunden gemessen und dabei eine Abbaurate von 1,77 mg/m²h ermittelt. Dies entspricht einer relativen Abbaurate von 2,5% und somit einer mittleren photokatalytischen Aktivität. Aus EP 2 597 073 A1, Tabelle 3, ist zu ersehen, dass bei Normalbetonen bei Verwendung nur von TiO₂ als Photokatalysator vergleichbare Abbauraten zu den Mischungen mit Titandioxid und Flugasche ermittelt wurden. Es ist daher davon auszugehen, dass auch PA-HPAC ohne Flugasche mindestens mittlere Abbauraten aufweisen wird.

## Patentansprüche

1. Aerogelbetonmischung, enthaltend
10 bis 85 kg/m³ Aerogelgranulat mit einer Korngröße im Bereich von 0,01 bis 4 mm,
100 bis 900 kg/m³ anorganisches Bindemittel,
10 bis 360 kg/m³ bezogen auf den Gehalt an Bindemittel wenigstens einer Silikastaubsuspension,
1 bis 45 kg/m³ bezogen auf den Gehalt an Bindemittel wenigstens eines Fließmittels,
0,2 bis 9 kg/m³ bezogen auf den Gehalt an Bindemittel wenigstens eines Stabilisierers,
0 bis 1200 kg/m³ wenigstens eines Leichtzuschlages,
**dadurch gekennzeichnet, dass** die Aerogelbetonmischung einen Photokatalysator enthält.

2. Aerogelbetonmischung gemäß Anspruch 1, **dadurch gekennzeichnet, dass** das anorganische Bindemittel, insbesondere hydraulische Bindemittel, ausgewählt aus Zement, insbesondere Portlandzement umfasst.

3. Aeorgelbetonmischung gemäß Anspruch 1 oder 2, **dadurch gekennzeichnet, dass** die Silikastaubsuspension 1 bis 60 Vol.-%, insbesondere 50 Vol.-%, Wirksubstanz (Feststoffgehalt) enthält.

4. Aerogelbetonmischung gemäß einem der Ansprüche 1 bis 3, **dadurch gekennzeichnet, dass** sie 0,05 bis 300 kg/m³, insbesondere 2,5 bis 60 kg/m³, eines Photokatalysators enthält.

5. Aerogelbetonmischung gemäß einem der Ansprüche 1 bis 4, **dadurch gekennzeichnet, dass** der Photokatalysator ausgewählt ist aus Oxiden von Titan, Eisen, Zink, Zinn, Wolfram, Niob, Tantal, und deren Mischungen.

6. Aerogelbetonmischung gemäß Anspruch 5, **dadurch gekennzeichnet, dass** es sich bei dem Photokatalysator um TiO₂ handelt.

7. Aerogelbetonmischung gemäß einem der Ansprüche 1 bis 6, **dadurch gekennzeichnet, dass** sie weiterhin einen die Agglomeration des Photokatalysator hemmenden Stoff, insbesondere Flugasche, enthält.

8. Verfahren zur Herstellung eines Aerogelbetons mit einer Aerogelbetonmischung nach einem der Ansprüche 1 bis 7, **dadurch gekennzeichnet, dass** man zunächst Bindemittel, Photokatalysator, Aerogel und gegebenenfalls Leichtzuschläge vermischt, dann ein Wasser-Fließmittel-Gemisch und den Stabilisierer, in einer Mischpause ein Wasser-Silikastaub-Gemisch, und nach erneutem Mischen das verbleibende Wasser hinzugibt und weiter mischt.

9. Verfahren nach Anspruch 8, **dadurch gekennzeichnet, dass** man nach jeweils 30 bis 60 Sekunden Mischzeit ein Wasser-Fließmittel-Gemisch und den Stabilisierer, in einer Mischpause das Wasser-Silikastaub-Gemisch, und insbesondere nach erneutem 30 sekundigem bis 2 minütigem Mischen das verbleibende Wasser hinzugibt und insbesondere für weitere 1 bis 10 Minuten mischt.

10. Verfahren nach Anspruch 8 oder 9, **dadurch gekennzeichnet, dass** man das Zugabewasser vor dem Vermischen auf eine Temperatur von weniger als 10°C, insbesondere auf weniger als 5°C kühlt.

11. Photokatalytisch aktive Hochleistungsaerogelbetone, Ortbetone, Betonfertigteile, Fassadenelemente, Spritzbetonschalen oder Außenschichten von gradierten Wandelementen, erhältlich nach einem Verfahren gemäß einem der Ansprüche 8 bis 10.

12. Verwendung einer Aerogelbetonmischung gemäß einem der Ansprüche 1 bis 7 für photokatalytische Oberflächen zum Abbau von Stickoxiden.

13. Verwendung eines photokatalytischen Hochleistungsaerogelbetons, Ortbetons, Betonfertigteils, Fassadenelements, einer Spritzbetonschale oder Außenschicht von gradierten Wandelementen gemäß Anspruch 11, für photokatalytische Oberflächen zum Abbau von Stickoxiden.

## Claims

1. Aerogel concrete mixture containing
10 to 85 kg/m³ aerogel granules with a particle size in the range from 0.01 to 4 mm,
100 to 900 kg/m³of inorganic binder,
10 to 360 kg/m³ based on the binder content of at least one silica dust suspension,
1 to 45 kg/m³ based on the binder content of at least one superplasticiser, 0.2 to 9 kg/m³ based on the binder content of at least one stabiliser,
0 to 1200 kg/m³ of at least one lightweight aggregate,
**characterised in that** the aerogel concrete mixture contains a photocatalyst.

2. Aerogel concrete mixture according to claim 1, **characterised in that** the inorganic binder, in particular hydraulic binder, comprises cement, in particular Portland cement.

3. Aerogel concrete mixture according to claim 1 or 2, **characterised in that** the silica fume suspension contains 1 to 60% by volume, in particular 50% by volume, of active substance (solids content).

4. Aerogel concrete mixture according to one of claims 1 to 3, **characterised in that** it contains 0.05 to 300 kg/m³, in particular 2.5 to 60 kg/m³, of a photocatalyst.

5. Aerogel concrete mixture according to any one of claims 1 to 4, **characterised in that** the photocatalyst is selected from oxides of titanium, iron, zinc, tin, tungsten, niobium, tantalum, and mixtures thereof.

6. The aerogel concrete mixture according to claim 5, **characterised in that** the photocatalyst is TiO₂.

7. Aerogel concrete mixture according to one of claims 1 to 6, **characterised in that** it further contains a substance which inhibits the agglomeration of the photocatalyst, in particular fly ash.

8. Process for producing an aerogel concrete with an aerogel concrete mixture according to one of claims 1 to 7, **characterised in that** the binder, photocatalyst, aerogel and optionally lightweight aggregates are first mixed, then a water/plasticiser mixture and the stabiliser are added, in a mixing pause a water/silica fume mixture is added and, after renewed mixing, the remaining water is added and mixing is continued.

9. Process according to claim 8, **characterised in that** after a mixing time of 30 to 60 seconds in each case, a water/plasticiser mixture and the stabiliser are added, in a mixing pause the water/silica fume mixture is added, and in particular after a further mixing time of 30 seconds to 2 minutes, the remaining water is added and in particular mixing is continued for a further 1 to 10 minutes.

10. Process according to claim 8 or 9, **characterised in that** the water added is cooled to a temperature of less than 10°C, in particular to less than 5°C, before mixing.

11. Photocatalytically active high-performance aerated concretes, in-situ concretes, precast concrete elements, façade elements, shotcrete shells or outer layers of graded wall elements, obtainable by a method according to any one of claims 8 to 10.

12. Use of an aerogel concrete mixture according to any one of claims 1 to 7 for photocatalytic surfaces for the degradation of nitrogen oxides.

13. Use of a photocatalytic high-performance aerogel concrete, in-situ concrete, precast concrete element, façade element, shotcrete shell or outer layer of graded wall elements according to claim 11, for photocatalytic surfaces for the degradation of nitrogen oxides.

## Revendications

1. Mélange de béton d'aérogel, contenant
10 à 85 kg/m³ de granulés d'aérogel d'une granulométrie comprise entre 0,01 et 4 mm,
100 à 900 kg/m³de liant inorganique,
10 à 360 kg/m³ par rapport à la teneur en liant d'au moins une suspension de poussière de silice,
1 à 45 kg/m³ par rapport à la teneur en liant d'au moins un superplastifiant, 0,2 à 9 kg/m³ par rapport à la teneur en liant d'au moins un stabilisateur,
0 à 1200 kg/m³ d'au moins un agrégat léger,
**caractérisé en ce que** le mélange de béton aérogel contient un photocatalyseur.

2. Mélange de béton aérogel selon la revendication 1, **caractérisé en ce que** le liant inorganique, en particulier le liant hydraulique, est choisi parmi le ciment, en particulier le ciment Portland.

3. Mélange de béton d'aérogel selon la revendication 1 ou 2, **caractérisé en ce que** la suspension de poussière de silice contient de 1 à 60 % en volume, en particulier 50 % en volume, de substance active (teneur en matières solides).

4. Mélange de béton aérogel selon l'une des revendications 1 à 3, **caractérisé en ce qu'**il contient de 0,05 à 300 kg/m³, notamment de 2,5 à 60 kg/m³, d'un photocatalyseur.

5. Mélange de béton aérogel selon l'une des revendications 1 à 4, **caractérisé en ce que** le photocatalyseur est choisi parmi les oxydes de titane, fer, zinc, étain, tungstène, niobium, tantale, et leurs mélanges.

6. Mélange de béton aérogel selon la revendication 5, **caractérisé en ce que** le photocatalyseur est du TiO₂.

7. Mélange de béton aérogel selon l'une des revendications 1 à 6, **caractérisé en ce qu'**il contient en outre une substance inhibant l'agglomération du photocatalyseur, en particulier des cendres volantes.

8. Procédé de fabrication d'un béton d'aérogel avec un mélange de béton d'aérogel selon l'une des revendications 1 à 7, **caractérisé en ce que** l'on mélange d'abord le liant, le photocatalyseur, l'aérogel et éventuellement des agrégats légers, puis un mélange eau-plastifiant et le stabilisateur, dans une pause de mélange un mélange eau-poussière de silice, et après un nouveau mélange, on ajoute l'eau restante et on continue à mélanger.

9. Procédé selon la revendication 8, **caractérisé en ce qu'**après chaque temps de mélange de 30 à 60 secondes, on ajoute un mélange eau-fluide et le stabilisateur, dans une pause de mélange le mélange eau-poussière de silice, et en particulier après un nouveau mélange de 30 secondes à 2 minutes, l'eau restante et on mélange en particulier pendant 1 à 10 minutes supplémentaires.

10. Procédé selon la revendication 8 ou 9, **caractérisé en ce que** l'on refroidit l'eau d'addition avant le mélange à une température inférieure à 10°C, en particulier à moins de 5°C.

11. Bétons aérogels à hautes performances et à activité photocatalytique, bétons coulés sur place, éléments préfabriqués en béton, éléments de façade, coques en béton projeté ou couches extérieures d'éléments de paroi gradués , pouvant être obtenus par un procédé selon l'une des revendications 8 à 10.

12. Utilisation d'un mélange de béton aérogel selon l'une des revendications 1 à 7 pour des surfaces photocatalytiques pour la dégradation des oxydes d'azote.

13. Utilisation d'un béton aérogel photocatalytique à hautes performances, d'un béton coulé sur place, d'un élément préfabriqué en béton, d'un élément de façade, d'une coque en béton projeté ou d'une couche extérieure d'éléments de paroi gradués selon la revendication 11, pour des surfaces photocatalytiques pour la dégradation des oxydes d'azote.
